(19) Europäisches Patentamt
European Patent Office
Office européen des brevets

(11) **EP 3 476 084 B1**

(12) **EUROPEAN PATENT SPECIFICATION**

(45) Date of publication and mention
of the grant of the patent:
**14.07.2021 Bulletin 2021/28**

(51) Int Cl.:
*G06F 3/16* *(2006.01)*  *H04L 12/403* *(2006.01)*
*G06F 13/42* *(2006.01)*  *G06F 13/38* *(2006.01)*
*H04J 3/06* *(2006.01)*  *G06F 3/06* *(2006.01)*
*H04L 7/00* *(2006.01)*

(21) Application number: **17737134.1**

(22) Date of filing: **26.06.2017**

(86) International application number:
**PCT/US2017/039198**

(87) International publication number:
**WO 2018/005322 (04.01.2018 Gazette 2018/01)**

(54) **SYSTEMS AND METHODS FOR CONTROLLING ISOCHRONOUS DATA STREAMS**

SYSTEME UND VERFAHREN ZUR STEUERUNG VON ISOCHRONEN DATENSTRÖMEN

SYSTÈMES ET PROCÉDÉS DE COMMANDE DE FLUX DE DONNÉES ISOCHRONES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2016 US 201662355166 P**
**09.06.2017 US 201762517247 P**
**23.06.2017 US 201715631807**

(43) Date of publication of application:
**01.05.2019 Bulletin 2019/18**

(73) Proprietor: **QUALCOMM INCORPORATED**
**San Diego, California 92121-1714 (US)**

(72) Inventors:
• **YU, Andy**
**San Diego, California 92121 (US)**
• **CHEUNG, Andrew**
**San Diego, California 92121 (US)**
• **KULKARNI, Ameya**
**San Diego, California 92121 (US)**

(74) Representative: **Tomkins & Co**
**5 Dartmouth Road**
**Dublin 6 (IE)**

(56) References cited:
WO-A1-2016/095972     US-A1- 2010 122 021
US-A1- 2015 049 849     US-B1- 7 215 670

**Description**

## BACKGROUND

**I. Field of the Disclosure**

The technology of the disclosure relates generally to handling arbitrary data streams on a data bus.

**II**. **Background**

Computing devices have become ubiquitous in contemporaneous living. The popularity of computing devices has exploded in part because of the ever increasing functionality available on the computing devices. Concurrent with the increase in functionality has been an increase in the numbers and types of supplemental devices that may be associated with the computing devices. In some cases the supplemental devices may be integrated into the computing devices, such as the integration of a camera into a smart phone. In other cases, the supplemental devices may be peripherals, such as audio headsets that are coupled to a computing device through some form of external interface. In both cases various protocols have arisen to allow applications running on the computing device to interact with the supplemental devices as needed.

One popular protocol is the Universal Serial Bus (USB) protocol. USB exists in various flavors including full speed (FS), high speed (HS), and super speed (SS). Additionally, USB allows for various clock synchronization schemes between a host and a peripheral device. In particular, USB contemplates synchronizing to a clock from the peripheral device (referred to as asynchronous), synchronizing to a clock from the host (referred to as synchronous), and sharing clock synchronization responsibilities between the host and the peripheral device (referred to as adaptive). While the various flavors and clock synchronization schemes allow for design flexibility to increase the number of devices using the USB protocol, the myriad options make some design decisions more difficult.

Such design decisions are further complicated when audio and/or video streams are being transmitted through a USB interface. Because of the universal nature of the USB form factor, a USB host is expected to be able to accommodate both audio/video capture from and audio/video playback to a peripheral. In particular, the USB host is expected to be able to accommodate different speeds, different clock synchronization schemes, different sampling rates, and variably-sized data. Conventional systems place the burden on such accommodation at the application layer, which requires substantial buffering and complicated algorithms on the part of applications in the application layer. Additionally, there are current proposals to increase service intervals, which may impose additional burdens on the application processor that handles the application layer. Accordingly, there is a need for a way to provide a USB compatible system that allows for greater flexibility in handling variable data streams both those currently implemented and that has the flexibility to handle differing input parameters.

## SUMMARY OF THE DISCLOSURE

Aspects disclosed in the detailed description include systems and methods for controlling isochronous data streams. The invention is defined by the independent claims. Advantageous embodiments are defined in the dependent claims. US7215670B1 discloses a Universal Serial Bus (USB) modem in which reassembly and segmentation operations are performed outside of the host computer is disclosed. A USB interface device is coupled to a digital signal processor (DSP) in the modem, and contains a shared memory in which bulk endpoints are established, at which received ATM cell payload data may be stored.

US2010/12202A1 discloses an electronic flash-memory card has additional pipes for commands and status messages so that data pipes are not clogged with commands and status messages, allowing for a higher data throughput. The command and status pipes are activated when a UAS/BOT detector detects that a host is using a USB-Attached-SCSI (UAS) mode rather than a Bulk-Only-Transfer (BOT) mode. The host can send additional commands and data without waiting for completion of a prior command when operating in UAS mode but not while operating in BOT mode. A command queue (CQ) in the device re-orders commands for accessing flash memory and merges data in a RAM buffer. Smaller 1 KB USB packets in the data pipes are merged into larger 8 KB payloads in the RAM buffer, allowing for more efficient flash access.

## BRIEF DESCRIPTION OF THE FIGURES

Figure 1 is a simplified perspective view of a mobile communication device with a remote audio peripheral coupled through a Universal Serial Bus (USB) cable and connector according to an exemplary aspect of the present disclosure;

Figure 2 is a block diagram of a conventional audio flow from a USB peripheral to an application layer within a processor;

Figure 3 is a block diagram of an audio flow within a USB system according to exemplary aspects of the present disclosure;

Figures 4A and 4B show two USB systems with alternate placements of a data regulator of the present disclosure;

Figure 5 is a block diagram of a data regulator;

Figure 6 is a signal flow diagram showing how packet size is calculated and how packets are passed to an application layer;

Figure 7 is a block diagram of an in-band drift reporting process from a microphone to a USB host;

Figure 8 is a block diagram of an out-of-band drift reporting process from a microphone to a USB host;

Figure 9 is a block diagram of an in-band drift reporting process from a microphone to a host and how the host uses same for playback to a speaker;

Figure 10 is a block diagram of an out-of-band drift reporting process from a microphone to a host and how the host uses same for playback to a speaker; and

Figure 11 is a block diagram of an exemplary processor-based system that can include the USB system of Figure 3.

## DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include systems and methods for controlling isochronous data streams. Particular aspects of the present disclosure are designed to be used with almost any isochronous data stream, but are well-suited for use with the Universal Serial Bus (USB) protocol. Further, aspects of the present disclosure are flexible to accommodate existing configuration possibilities within the USB protocol as well as accommodate proposed future changes in the USB protocol. The flexibility of the systems and methods is provided by calculating: (1) drift between a USB host system time and the application and (2) drift between the USB host system and a USB device clock. Based on these two drift calculations, a time stamp may be synthesized to program a next delivery schedule. Using this time stamp, jitter correction can take place and uniformly-sized packets may be assembled to pass to an application processor. The use of such uniformly-sized packets may eliminate the need for buffers in an application layer, which may improve user experience when a data stream is an audio data stream.

Before addressing particular aspects of the present disclosure, a brief overview of an exemplary system which may implement the systems and methods for controlling isochronous data streams is disclosed. As noted above, while applicable to various isochronous data streams, exemplary aspects are particularly applicable to USB audio streams. Thus, the exemplary system is a USB digital audio system.

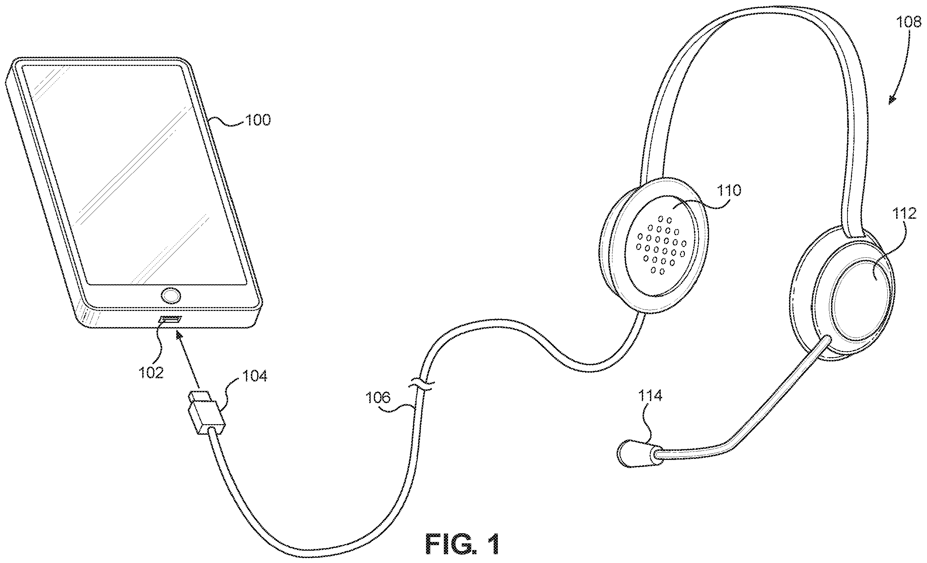

In this regard, Figure 1 is a simplified perspective view of a mobile communication device 100 with a USB Type-C receptacle 102 configured to couple to a USB Type-C connector 104 on a USB cable 106. At a distal end of the USB cable 106 is a digital audio headset 108 having plural speakers 110 in headphones 112 and a microphone 114. Digital audio signals may pass between the mobile communication device 100 and the digital audio headset 108 through the USB cable 106. Audio from the microphone 114 may be unevenly distributed in a time domain as speech patterns are rarely periodic. Likewise, the mobile communication device 100 does not know *a priori* what data speed the digital audio headset 108 supports nor does the mobile communication device 100 know *a priori* what synchronization format the digital audio headset 108 uses.

While exemplary aspects of the present disclosure are well suited for audio environments such as the digital audio headset 108 of Figure 1, the present disclosure is not so limited, and may be used with an audio/video signal that passes between a computing device, such as the mobile communication device 100, and a virtual reality headset having a display, speakers, and a microphone (or a display having speakers and a microphone). Likewise, while a USB Type-C cable is disclosed above, the present disclosure is readily usable with other versions of USB. In fact, being able to handle any of the USB speeds (e.g., full speed (FS), super speed (SS), high speed (HS)) is one of the advantages of the present disclosure.

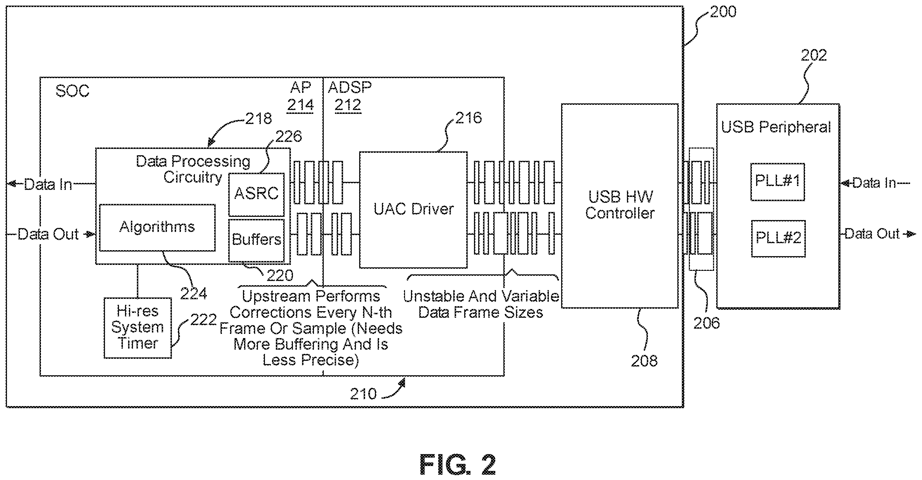

Figure 2 provides a simplified block diagram of how audio (and perhaps video) data is handled in a mobile communication device 200 that does not implement aspects of the present disclosure. The mobile communication device 200 may be coupled to a USB peripheral 202, such as a digital audio headset. The USB peripheral 202 may support asynchronous, synchronous, adaptive, or mixed clock synchronization modes and may include one or more phase locked loops (PLLs, two illustrated) or delay locked loops (DLLs, not illustrated). The USB peripheral 202 may receive data (referenced as Data IN), such as through a microphone (sometimes referred to as capture), as well as output data (referenced as Data OUT), such as through a speaker in a headphone (sometimes referred to as playback). The data is passed to and from the mobile communication device 200, such as through a USB cable 206, and through an appropriate receptacle (not illustrated in Figure 2) to a USB hardware controller 208 within the mobile communication device 200. The USB hardware (sometimes referenced as HW in the drawings) controller 208 is communicatively connected to a system on a chip (SoC) 210. The SoC 210 may include an audio digital signal processor (ADSP) 212 and an application processor (referred to in the drawings as AP) 214. The ADSP 212 may include a USB Audio Client (UAC) driver 216. The data from the USB peripheral 202 is received at the USB hardware controller 208 and passed to the SoC 210. Note that the data from the USB peripheral 202 is jittery and includes variable data frame sizes (symbolically illustrated by the variously-sized boxes between the USB hardware controller 208 and the UAC driver 216). Further variability may occur if the one or more PLLs of the USB peripheral 202 run fast or slow. Still further variability may occur, because in the USB protocol, there is no requirement that there be a fixed number of samples within a frame. While such variability is part of what contributes to the flexibility and appeal of the USB protocol, such variability is generally difficult to handle in audio processing. When the USB hardware controller 208 has data in its internal buffers (not shown), the USB hardware controller 208 generates an interrupt for the UAC driver 216. The USB hardware controller 208 does not have a time stamping function. The UAC driver 216 receives the interrupt, drains the buffer of the USB hardware controller 208, and attempts to provide a constant amount of data to the application processor 214. When there is fractional audio sampling, such as the common sampling rate of 44.1 kilohertz (kHz), which is fractional relative to one millisecond (corresponding to a common USB bus transfer speed of 1000 Hz), the UAC driver 216 will send data with 44 samples in nine out of ten packets and one packet with 45 samples. Data processing circuitry 218 in the application processor 214 uses its buffers 220 in conjunction with a high resolution system timer 222 to smooth out the variability before the data is provided to application layer algorithms 224. An asynchronous sample rate converter (ASRC) 226 may assist in this process of correcting drift and a jittery cluster of samples over a time duration. This arrangement places a burden on the application processor 214 and requires additional programming for the application layer algorithms 224. Note that while the ADSP 212 and the application processor 214 are described as being separate processors, both devices may be integrated into a single integrated circuit (IC). While not illustrated, a hardware direct memory access (DMA) controller may generate a data interrupt, and a hardware latched time stamp from the high resolution system timer 222 gets stored in a hardware register. This time stamp is not readily associated with the USB packets and thus is not readily available to assist in drift detection.

Exemplary aspects of the present disclosure provide error free drift detection from which jitter correction may be applied and from which a synthesized time stamp may be calculated. Using this synthesized time stamp, a next delivery schedule may be calculated which is used to drain the buffers. Further, by repositioning the calculation outside the application processor, uniform data frame sizes may be provided to the application processor, which in turn may improve audio quality and potentially provide power savings opportunities. One of the benefits of the present disclosure is the flexibility of the disclosure to accommodate any form of clock synchronization approach (asynchronous, synchronous, or adaptive) between the host and the device as well as various data speeds, different sampling rates, variably-sized data, different USB speeds (HS, FS, SS), and differing service intervals. While the present disclosure may be implemented strictly in hardware, the flexibility of the present disclosure is improved through the use of software, where the variables are more readily adjusted to accommodate any configuration. Before exploring the particulars of the system of the present disclosure and the various signaling that may be used to implement aspects of the present disclosure, an overview of the equations used to create the flexibility are presented.

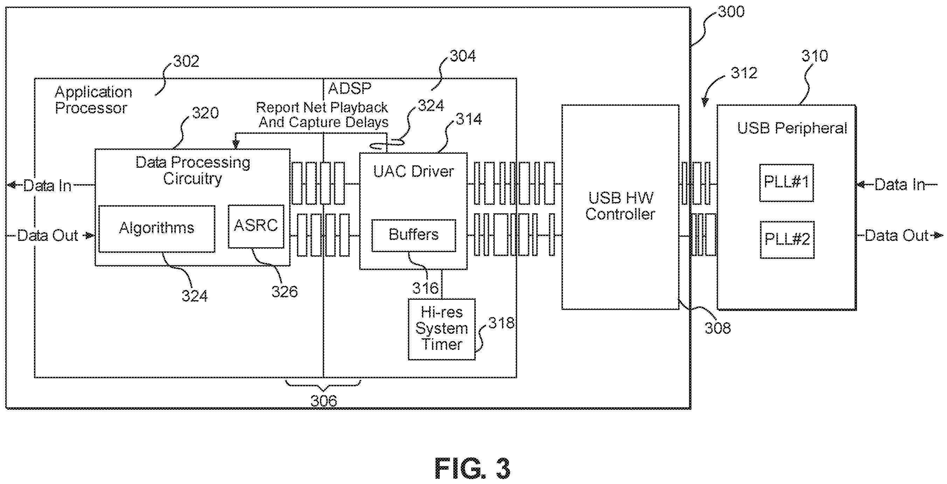

The following section is math intensive and preserved for the interested reader, but may not be critical to understand exemplary aspects of the present disclosure. For the readers who prefer not to let math clutter their understanding of the disclosure, the discussion of exemplary aspects begins again below with reference to Figure 3.

The basic drift compensated rate matched audio buffer delivery model that is used by the host may be expressed as:

$$\text{ticks}_{\text{next}} = \text{ticks}_{\text{reference}} + \text{ticks}_{\text{offset}} + D_1 + D_2 \ldots + D_M \qquad \text{(Eq. 1)}$$

In Eq. 1, $\text{ticks}_{\text{next}}$ (also referred to as "Tnext") is the synthesized time stamp that is effectively used to program the next delivery schedule. $\text{ticks}_{\text{reference}}$ (also referred to as "Tref") is the timestamp of the first synthesized timestamp. $\text{Ticks}_{\text{offset}}$ (also referred to as "Toffset") is the delta from the $\text{ticks}_{\text{reference}}$ used for the delivery of buffers and also serves as timing of the picking up of buffers for playback and capture. In Eq. 1, each $D_i$ represents the total drift between a device clock and a USB time reference. In most situations, there are only three clocks to consider, the USB host clock, the audio application clock, and the USB device clock. The USB host clock serves as the system time reference for both of the other two clocks, and thus, Eq. 1 will typically simplify to:

$$\text{ticks}_{\text{next}} = \text{ticks}_{\text{reference}} + \text{ticks}_{\text{offset}} + D_{\text{app-usb}} - D_{\text{device-usb}} \qquad \text{(Eq. 2)}$$

Eq. 2 works for both audio capture and audio playback paths. $D_{app-usb}$ is the time difference between the audio application clock and the USB host clock. $D_{device-usb}$ is how fast the USB device clock is going with reference to the USB host clock. Together these values give the net system drift (i.e., is the audio sample moving faster or slower). For the audio capture path, when $D_{device-usb}$ is positive, the device is delivering audio samples faster than the USB host is clearing them. When $D_{app-usb}$ is positive the audio application is retrieving audio samples faster than the USB host is delivering them. On the audio playback path, when $D_{app-usb}$ is positive, the audio application is delivering audio samples faster than the USB host is clearing them. When $D_{device-usb}$ is positive, the device is retrieving audio samples faster than the USB host is delivering them. This value is passed to an asynchronous sample rate converter (ASRC) to synthesize and/or interpolate audio allowing the ASRC to know how much to correct.

The drift $D_{device-usb}$ for the capture and playback paths may be determined explicitly or implicitly. The drift is obtained based the direction of the data flow (i.e., device-to-host (usually capture) or host-to-device (usually playback)). The source of the drift information is dependent on what the USB advertises and which isochronous synchronization mode is selected for a USB endpoint pair by the high level operating system (HLOS). In fact, there are twenty combinations of isochronous synchronization modes between the capture and playback paths.

The source of drift information is summarized in Table 1 below. $D_{device-usb}$ is abbreviated $D_{device}$ in Table 1.

**Table 1 Source of Drift Information**

| In/Out | Sync | Adaptive | Async Implicit | Async Explicit | None |
|---|---|---|---|---|---|
| Sync | In: Eq 12 Out: $D_{device} = 0$ | In: Eq 12 Out: $D_{device} = 0$ | N/A | In: Eq 12 Out: Eq 6 | In: Eq 12 Out: None |
| Adapti ve | In: Eq 12 Out: $D_{device} = 0$ | In: Eq 12 Out: $D_{device} = 0$ | N/A | In: Eq 12 Out: Eq 6 | In: Eq 12 Out None |
| Async | In: Eq 12 Out: $D_{device} = 0$ | In: Eq 12 Out: $D_{device} = 0$ | In: Eq 12 Out: $D_{device} = D_{device, in}$ | In: Eq 12 Out: Eq 6 | In: Eq 12 Out: None |
| None | In: None Out: $D_{device} = 0$ | In: None Out: $D_{device} = 0$ | In: Eq 12 Out: $D_{device} = D_{devicee,in}$ | In: None Out: Eq 6 | N/A |

Table 1 assumes that the audio application clock is in phase with the USB host clock ($D_{app-usb} = 0$). This assumption causes all synchronous and adaptive playback (Out) paths to have Out: $D_{device} = 0$.

Exemplary aspects of the present disclosure provide techniques to detect drift for essentially any variation of sampling frequency, sampling interval, sample size, bus speed, clock synchronization mode, or the like. This flexibility is achieved through generic equations that accommodate these variable inputs and allow for the appropriate drift detection.

It should be appreciated that the quality, environment, and manufacturing precision all affect one asynchronous clock's ability to keep time compared to another asynchronous clock in the system. There are systems where there are multiple clocks along the capture path and multiple clocks on the playback path. The net drift for a path is the sum of the time differentials between each subsystem clock along the path. The present disclosure illustrates that by measuring drift at the appropriate frequency, error free drift detection is enabled and needless measurements are avoided, which may allow power savings.

Audio streaming in a USB system adds difficulty in that such audio streaming is expected to use the isochronous transfer mode. It is a real-time dedicated bandwidth mode with no error checking or retries. Audio samples are bundled in the form of an audio packet and an audio packet may be sent once every (micro)frame. Each such frame is either 125 μs or 1 ms depending on whether a HS or FS USB transfer mode is selected by the physical layer. The USB protocol supports sending such frames in bursts for power savings and for handling large network latencies. The number of frames per service interval is described by $2^{binterval-1}$ where binterval is currently a value between one and 16. Discussions have been made amongst the governing body for the USB protocol for expanding this number. The number of frames per service interval is fixed, but the number of audio samples sent per burst can be variable.

A factor that has been considered as pertinent to evaluating drift includes keeping the accumulated drift using the source unit of measurement. Conversions from one unit to another unit generally involve a division operation which may introduce rounding or truncation errors. Accumulation of such truncation errors may lead to a divergence in the interpretation of time between the host and the device. By keeping the accumulation in the source unit of measurement, any truncation error is temporary and should be seen by the system as insignificant jitter.

A further factor is the maximum tolerable system jitter. A reasonable tolerable system jitter is less than one audio sample of accuracy to avoid being interpreted as real drift by the audio system. Thus, the tolerable system jitter may be a function of the audio sampling frequency. If the tolerable jitter is sufficiently small, hardware assistance may be necessary as a pure software implementation may not be able to react fast enough to service an interrupt to timestamp an event.

Given these considerations, Eq. 6 may be derived when considering a USB audio device's instantaneous frequency feedbacks as a clock source. In such instance, $F_f$ is the average number of audio samples per frame that the USB device reports to the USB host. An instantaneous frequency $F_f$ is reported to the host in the FS USB transfer mode on every:

$$Period_{FS} = 2^{10\text{-bRefresh}} \text{ frames} \qquad (Eq. 3)$$

Or in the HS USB transfer mode on every:

$$Period_{HS} = 2^{(\text{binterval -1})} \text{ microframes} \qquad (Eq. 4)$$

The instantaneous drift is thus

$$\Delta drift = F_{fk} - F_{fk-1} \qquad (Eq. 5)$$

and is computed when the host receives a feedback

$$Ticks_{conv}(D) = (D*1000)/f_s * 19.2 \text{ MHz} \qquad (Eq. 6)$$

Where $f_s$ is the sampling frequency. Note that 19.2 MHz is the speed of one exemplary high resolution system timer. If the high resolution system timer has a different speed, a different value should be substituted herein, which turns Eq. 6 into the following generic equation.

$$Ticks_{conv}(D) = (D*1000)/f_s * f_{timer} \qquad (Eq. 6A)$$

There are challenges in recovering a clock from a USB 2.0 signal resulting from the definitional equivalence of the virtual packet being one virtual frame. Accordingly, a solution to recover a clock from a non-linear data stream is required. Such solution follows, with the assumption that each clock crystal has at least 500 ppm of accuracy. The number of samples per virtual frame is defined as

$$numSamplesPerVirtualFrame = f_s/f_t*2^{(\text{binterval-1})} \qquad (Eq. 7)$$

Where $f_s$ is the sampling frequency, $f_t$ is the service interval frequency, and binterval is as defined above. For ease of notation, the numSamplesPerVirtualFrame may be abbreviated as NSPVF

Additionally, an alignment multiplier is needed, and defined as follows:

$$alignmentMultiplier = \frac{1000000}{GCD(MOD(NSPVF*1000000,1000000),1000000)} \qquad (Eq. 8)$$

where 1000000 is arbitrarily chosen as a very large base 10 value to increase fractional precision. From Eq. 7 and 8, an expected number of samples may be calculated as follows:

$$expectedNumSamples = NSPVF*alignmentMultiplier \qquad (Eq. 9)$$

The alignmentMultiplier represents the least number of virtual frames needed by the host before a stable drift determination is possible. The expectedNumSamples is the number of samples expected to be received. The NSPVF is an intermediate variable for visual clarity and not a floating point. For each alignmentMultiplier number of virtual frames received, the Adrift is computed by:

$$\Delta drift = numSamplesReceived - expectedNumSamples \qquad (Eq.\ 10)$$

Thus, the net drift from the beginning of the audio session is computed by:

$$D = D_{net\ drift} + \Delta drift \qquad (Eq.\ 11)$$

The conversion of D audio samples to system timer (sometimes referred to as Qtimer) ticks is:

$$Ticks_{conv}(D) = D_{net\ drift}/f_s*19.2\ MHz \qquad (Eq.\ 12)$$

Again, note that 19.2 MHz is the speed of the high resolution system timer. If the high resolution system timer has a different value, then such different value should be substituted herein, resulting in:

$$Ticks_{conv}(D) = D/f_s*f_{timer} \qquad (Eq.\ 12A)$$

With the drift information and the clock detection information outlined above, rate matching may be done. With rate matching, uniform sample sizes may be created and sent to the application processor as outlined below. However, before addressing the uniform sample sizes, more math is presented to explain the rate matching. In particular, this helps define how to calculate ticks$_{offset}$.

Remember, absent drift

$$ticks_{next} = ticks_{reference} + ticks_{offset} \qquad (Eq.\ 13)$$

Where ticks$_{offset}$ is defined as

$$ticks_{offset} = \frac{f_t}{1\ khz}*\frac{f_d}{f_s}*\ i \qquad (Eq.\ 14)$$

Where $f_d$ is the delivery frequency and i increments on every tick$_{next}$ and wraps around when i = $f_s$ to avoid i from overflowing. At the wrap around point, ticks$_{reference}$ = ticks$_{next}$ and then i = 0.

Armed with the math set forth above, exemplary aspects of the present disclosure are now set forth. In this regard, Figure 3 is a simplified block diagram of how audio (and perhaps video) is handled in a mobile communication device 300 that implements exemplary aspects of the present disclosure.

The mobile communication device 300 includes an application processor 302 and an ADSP 304. In an exemplary aspect, the application processor 302 and the ADSP 304 may be in a single SoC 306. Likewise, while described as conceptually distinct processors, these processors may be part of a single host processor. Still further, while ascribed specific functions such as "application processor" or "ADSP," it should be appreciated that other processors that are traditionally not referred to by such appellations may still implement comparable functionality without departing from the scope of the present disclosure. The application processor 302 may communicate with a USB hardware controller 308, which communicates with a USB peripheral 310, such as a headset, through a USB interface 312, which may include USB receptacles, USB connectors, and a USB cable.

As with the USB peripheral 202 of Figure 2, the USB peripheral 310 may support asynchronous, synchronous, adaptive, or mixed clock synchronization modes and may include one or more PLLs (two illustrated) or DLLs (not illustrated). The USB peripheral 310 may receive data (referenced as Data In), such as through a microphone (as noted above, sometimes referred to as capture), as well as output data (referenced as Data Out), such as through a speaker in a headphone (as noted above, sometimes referred to as playback). The data is passed to and from the mobile communication device 300 through the USB interface 312.

The ADSP 304 may include a UAC driver 314. The UAC driver 314 may use a host controller interface (HCI) (not illustrated) to communicate with the USB hardware controller 308. In conventional systems, there is no HCI in the UAC driver 314, because the ADSP 304 does not communicate with the USB hardware controller 308. However, exemplary aspects of the present disclosure allow for communication between the USB hardware controller 308 and the ADSP 304. Accordingly, an HCI may be provided to effectuate such communication. The UAC driver 314 receives unstable and variably-sized data frames from the USB hardware controller 308.

Exemplary aspects of the present disclosure add one or more buffers 316 to the UAC driver 314 as well as couple a high resolution system timer 318 to the UAC driver 314, which allows the UAC driver 314 to pass stable, precise, and fixed data frame sizes to data processing circuitry 320 in the application processor 302 (or other processor that handles applications). Still further, the UAC driver 314 may provide net playback and capture delays to the data processing circuitry 320 through a signal 322. By providing uniform data frames to the data processing circuitry 320, application layer algorithms 324 do not have to buffer the data as heavily or perform the corrections associated with the data processing circuitry 218 of Figure 2. Even though the application layer algorithms 324 receive uniform data frames, the application processor 302 may include an ASRC 326 that may assist in processing the signal 322 to act on drift correction information and/or jitter issues. Again, note that the application processor 302 may be merged with the ADSP 304 as a single microprocessor or may be provided different names by different vendors.

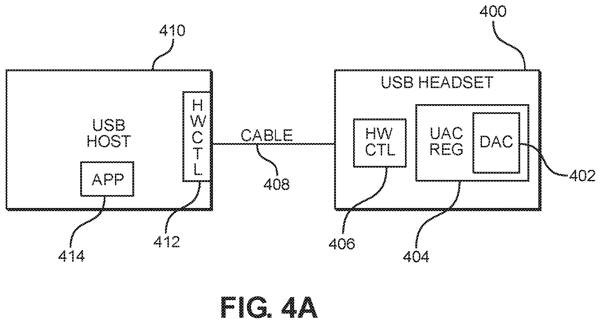

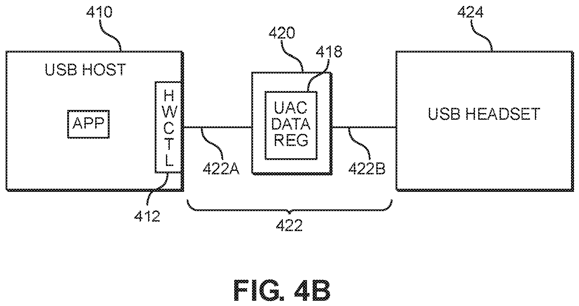

While Figure 3 contemplates positioning the UAC driver 314 in the ADSP 304, it should be appreciated that other positions are also possible as illustrated in Figures 4A and 4B.

In this regard, Figure 4A illustrates a headset 400 (or other USB peripheral) with a digital audio converter (DAC) 402 that captures data from a microphone or the like and provides the data to a UAC data regulator (UAC data reg) 404. The UAC reg 404 makes the packet size uniform and provides packets to a hardware controller 406, which in turn passes the packets over a cable 408 to a USB host 410. The USB host 410 receives the packets with a host hardware controller 412. Applications 414 (labeled APP in the Figures) in the application layer (not specifically illustrated) receive the uniform packets and process them as is well understood. In such an arrangement, the USB host 410 may operate similarly to the USB host of Figure 2, but benefits from the uniform packets that the headset 400 sends to the USB host 410. The increased circuitry in the headset 400 may increase the cost of the headset 400, but may provide benefits to legacy USB hosts.

In Figure 4B, the USB host 410 remains unchanged, but instead of placing a data regulator in the headset 400, a UAC data regulator 418 is provided in an intermediate device 420, such as a dongle 420. The dongle 420 can be on a host side 422A or a peripheral side 422B of a cable 422. That is, the cable 422 may extend between the dongle 420 and a headset 424 with the dongle 420 inserted into a USB receptacle of the USB host 410, or the cable 422 may extend between the USB host 410 and the dongle 420 with the dongle 420 inserted into the USB receptacle of the headset 424. As still another possibility (illustrated), the dongle may be in the cable 422 and the cable 422 inserts into the respective receptacles of the USB host 410 and the headset 424.

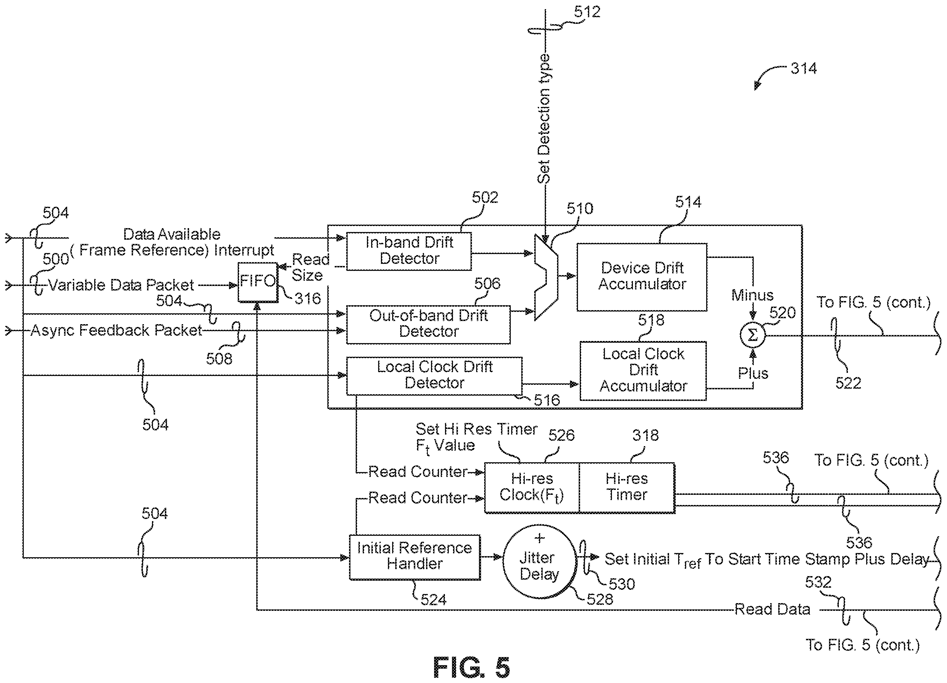

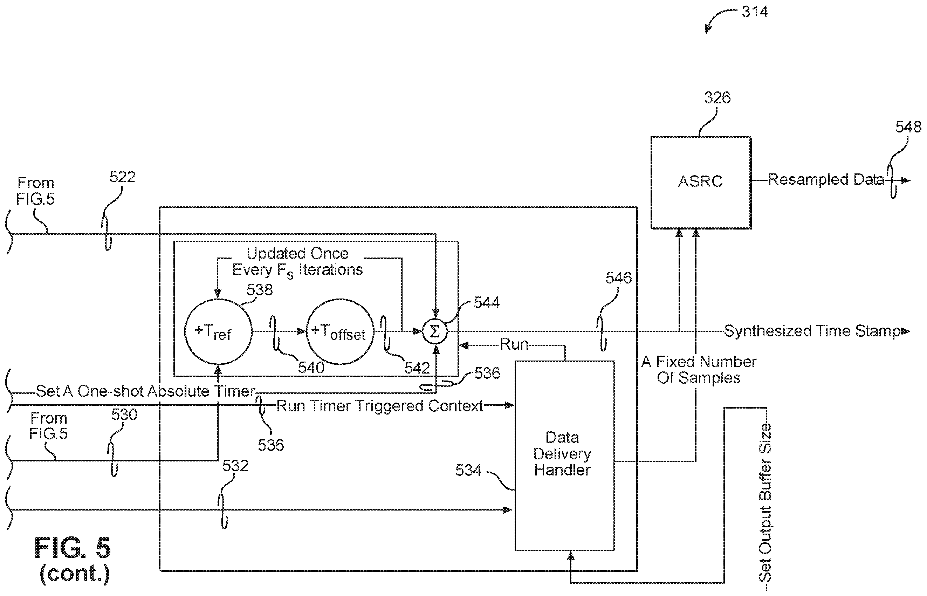

Figure 5 is a block diagram of a data regulator that may be implemented inside the UAC driver 314 of Figure 3. The buffer 316 (also referred to as a FIFO in Figure 5), receives a variably-sized data packet 500. An in-band drift detector 502 reads the size of the data packet 500 in the buffer 316 when it receives a data available interrupt signal 504. Alternatively, an out-of-band drift detector 506 receives an asynchronous feedback packet signal 508 and the data available interrupt signal 504. One of the detectors 502 or 506 is read by a multiplexer 510. The multiplexer 510 selects between outputs of the detectors 502 and 506 by a set detection type signal 512. The multiplexer 510 outputs a signal to a device drift accumulator 514. Concurrently, the data available interrupt signal 504 is provided to a local clock drift detector 516, which provides a signal to a local clock drift accumulator 518. A summer 520 subtracts the device drift accumulator 514 output ($D_{device-usb}$) from the output of the local clock drift accumulator 518 ($D_{app-usb}$) and outputs a signal 522. The signal 522 corresponds to $D_{app-usb} - D_{device-usb}$.

With continued reference to Figure 5, the data available interrupt signal 504 is also provided to an initial reference handler 524. The initial reference handler 524 outputs a read counter to a high resolution clock function 526. The high resolution clock function 526 also receives a read counter from the local clock drift detector 516. The high resolution clock function 526 may also receive a set Hi-res Timer $F_t$ value which would allow the clock value to be varied. Note that it is unlikely that this value changes in mid-operation, but can be set at system initialization or the like. The high resolution clock function 526 interoperates with the high resolution system timer 318. The initial reference handler 524 also is added to a jitter delay element 528 and used to set an initial Tref to start a time stamp plus delay signal 530.

The buffer 316 outputs a data signal 532 (labeled "read data") to a data delivery handler 534, which also receives an output 536 of the high resolution system timer 318. The data delivery handler 534 may also receive a set output buffer size command (perhaps from the ASRC 326) indicating what size buffers the ASRC expects to process. The signal 530 is provided to a summer 538 which adds Tref thereto and generates an intermediate signal 540, to which is added Toffset, to generate a signal 542, which is passed to a summer 544 (which essentially performs either Eq. 6 or Eq 12 as appropriate). The summer 544 adds the signal 542, the signal 522, and the output 536 to generate a synthesized time stamp 546 (essentially Eq. 2). The data delivery handler 534 outputs a run command for the summer 544 and provides a fixed number of samples to the ASRC 326. The ASRC 326 also receives the synthesized time stamp 546 and outputs resampled data 548. While not specifically illustrated, a set sampling frequency command may also be received to assist in calculations as noted above.

In an exemplary aspect, this data regulator is implemented as software. In another exemplary aspect, this data regulator may be implemented in hardware.

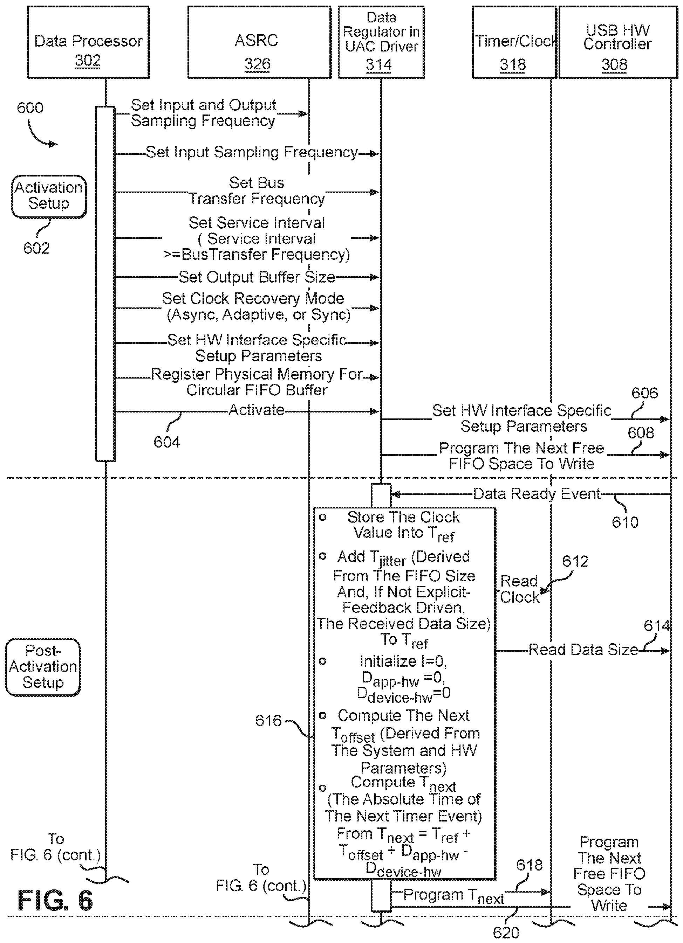

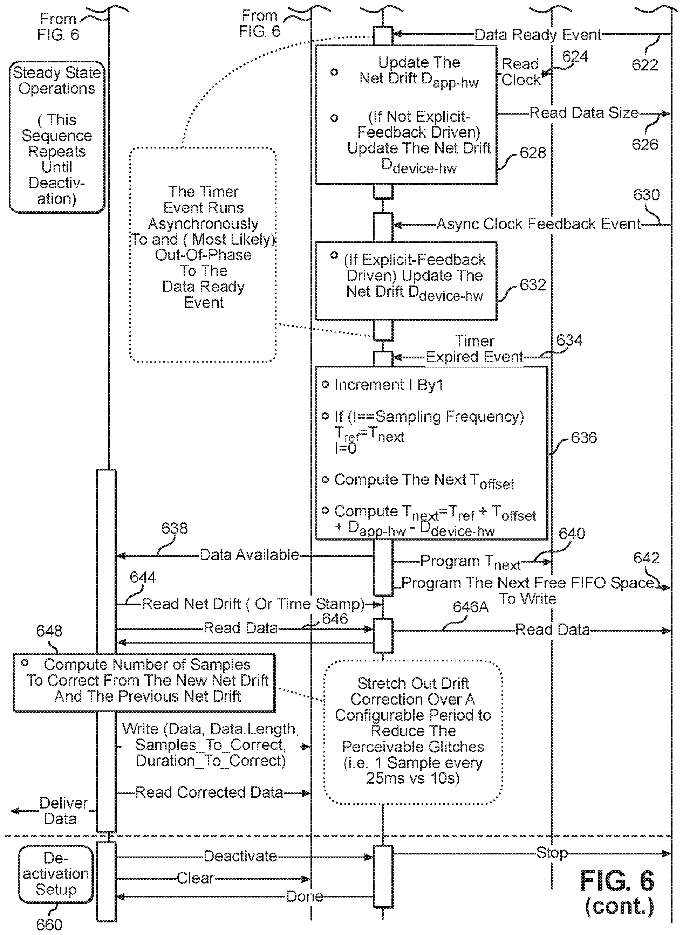

Figure 6 is a signal flow diagram representing signals and processes that may occur when an application in a data processor wants to use the UAC driver 314 of Figure 3. Initially, an application provides setup information in an activation setup stage. The setup information may include sampling rate, bus transfer frequency, buffer size, clock recovery mode, and the like. This setup information is provided to a data rate regulator (see Figure 5) of the UAC driver 314. The data rate regulator calculates how to deliver data from the USB hardware controller 308 accurately and stably (without jitter) at the rate that has been requested. The process for this calculation is explained above. The timer/clock element in this diagram is the high resolution system timer 318 of Figure 3, but other timers could also be used.

Figure 6 is a signal flow diagram 600 representing signals and processes that may occur when an application in a data processor such as the application processor 302 wants to use the UAC driver 314. Initially, the application provides the setup information in the activation setup stage (block 602). The application processor 302 sets the input and output sampling frequency at the ASRC 326, and sends the input sampling rate frequency, the bus transfer frequency, service interval (which is greater than or equal to the bus transfer frequency), output buffer size, clock recovery mode (asynchronous, adaptive, or synchronous), any hardware interface specific setup parameters, and register any physical memory for the buffer(s) 316 to the UAC driver 314 and particularly to a data regulator in the UAC driver 314. Finally an activate command (signal 604) is sent to the data regulator. The data regulator passes the hardware interface specific setup parameters to the USB hardware controller 308 (signal 606) and programs the next free buffer space to write (signal 608). The USB hardware controller 308 sends a data ready event signal 610 to the data regulator. This signal 610 causes the data regulator to read the high resolution system timer 318 (signal 612), read the data size (signal 614) from the USB hardware controller 308, and perform a series of actions including: store the clock value into Tref, add Tjitter (derived from the buffer size and if not explicitly feedback driven, the received data size) to Tref, initialize i = 0; $D_{device-usb}$=0; $D_{app-usb}$=0; and compute the next Toffset; compute Tnext (Eq. 2) (see generally block 616). The data regulator then programs Tnext for the high resolution system timer 318 (signal 618) and programs the next free buffer space to write (signal 620).

With continued reference to Figure 6, the system enters a steady state and the data regulator receives a next data ready event (signal 622) from the USB hardware controller 308, which triggers a read clock signal 624 and a read data size signal 626 which allows the data regulator to update the net drift ($D_{device-usb}$ and $D_{app-usb}$) (see generally block 628).

At some point, the USB hardware controller 308 may send an asynchronous clock feedback event (signal 630) to the data regulator, which causes the data regulator to update $D_{device-usb}$ (see generally block 632).

At some other time, the high resolution system timer 318 may send a timer expired event signal 634 to the data regulator. Responsive to this signal 634, the data regulator may increment i by one, and if i equals the sampling frequency, set Tref to Tnext and i = 0; compute the next Toffset; and compute Eq. 2 (see generally block 636). The data regulator may send a data available signal 638 to the application processor 302, and program Tnext (signal 640), and program the next free buffer space to write (signal 642). The application processor 302 reads the net drift or time stamp from the data regulator (signal 644) and reads data from the buffer(s) 316 in the UAC driver 314 (signal 646) and/or the USB hardware controller 308 (signal 646A).

The application processor 302 computes the number of samples to correct from the new net drift and the previous net drift (block 648), and writes data into its file system, such as by using a write command with data, data length, samples to correct, and duration to correct variables. Note that the data may be voice packets. If necessary, the drift correction may be stretched out over a configurable period to reduce perceivable glitches. However, even with the stretched-out period, it is expected that such correction takes place on the order of 25 ms instead of 10 seconds as is sometimes used in conventional systems. The process then deactivates (block 660).

Note further that additional aspects of the present disclosure provide techniques to provide error free drift detection and support future planned power saving initiatives. In this regard, it should be appreciated that fractional sampling rates, such as the relatively common 44.1 kHz, lend themselves to false detections of drift because of the phase mismatch between accumulators at the peripheral device and accumulators at the host. In contrast to signaling protocols that include time stamps to assist in drift detection, the USB protocol does not include time stamps from the peripheral device to the host. Rather, the host only receives packetized USB data. Inside each USB packet, the amount of data is variable. The problem with the fractional sampling rate and unknown packet size has been well documented in the industry. The usual solution is to time average the samples over a long period, such as ten minutes, and then perform correction of the drift. The long delay in assembling the time average of samples results in latency before correction is applied. Until the correction is applied, the user may experience a degraded audio experience. Likewise, the granularity of the correction may not be appropriate for instantaneous or random drift events.

Exemplary aspects of the present disclosure allow for error free drift detection. This is best explained through the use of an example. Assuming that the sampling frequency (Fs) is 44.1 kHz and that the USB bus transfer speed is 1000 Hz (i.e., 1 sample per millisecond), and a binterval (samples per packet) of 11, the host would expect to receive 45158.4 samples per interval. The fractional sample cannot be sent under USB rules. The peripheral device accumulator begins when the samples are transmitted to the host, but the host accumulator is delayed until after reception, so the accumulators are out of phase. At the second interval the peripheral accumulator is 90316.8. Again, it is the fractional sample which shows up as drift relative to the host accumulator. Over time, without external drift, this drift will toggle between 1 and 0, but may on occasion cause a correction to be made that is not needed.

Instead of time averaging the drift as in previous solutions, exemplary aspects of the present disclosure evaluate the fractional remainder and find the number of intervals required to arrive at a whole number. In the present example, if the fractional remainder is 0.4, then the number of intervals required to arrive at a whole number is 5. (0.4 = 2/5, the denominator is 5, so five intervals). The UAC driver 314 may check the accumulator at a boundary determined by the number of intervals so calculated. Thus, in this example, the UAC driver 314 checks the drift every five intervals. The phantom drift caused by the fractional sampling rate is not present, so if drift is detected, that is real drift for which a correction must be made (i.e., interpolation or decimation or the like). Further, by ignoring drift in the intermediate samples, calculations may be forgone, which may result in power savings.

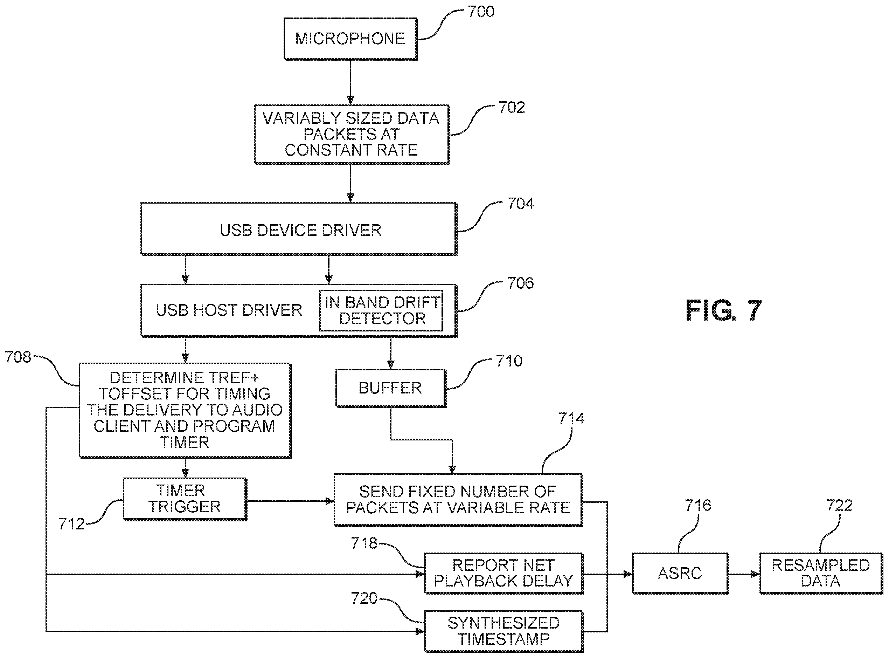

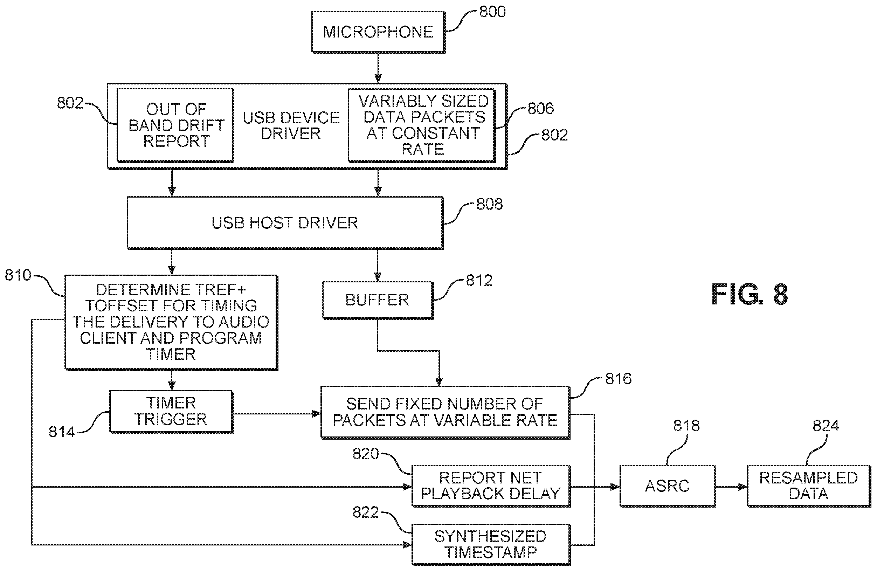

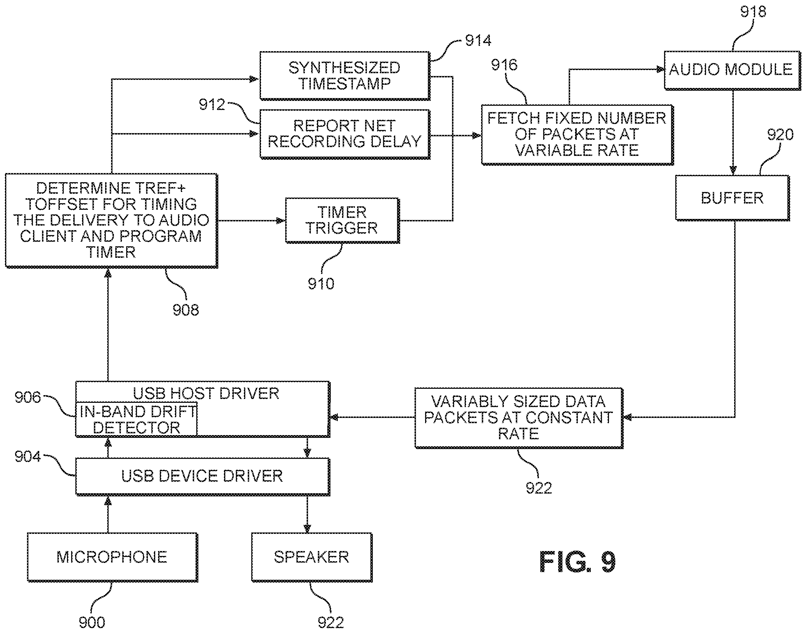

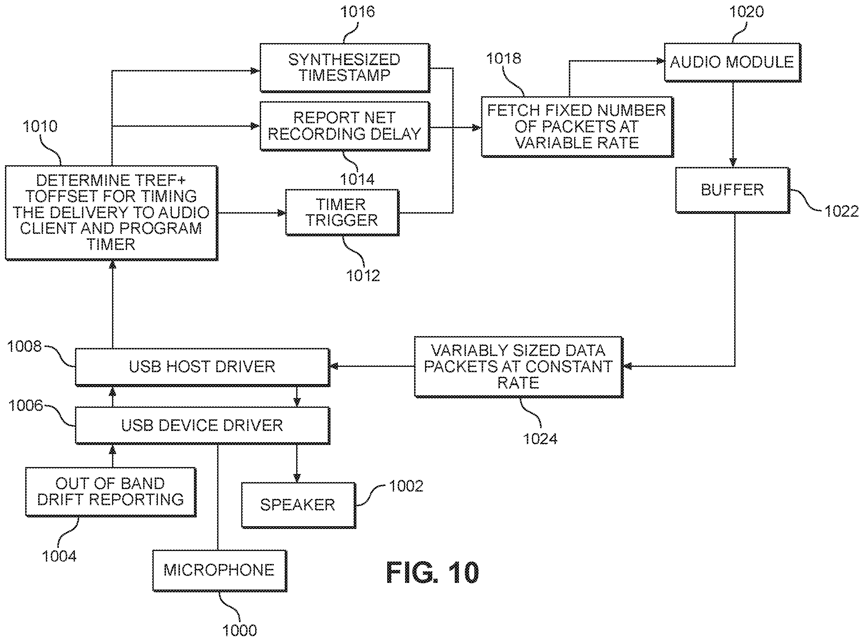

The USB protocol contemplates two forms of drift reporting. The first is an implicit drift detection where in-bound signals are examined and compared to known values to determine a drift. The second is an explicit out-of-band signaling of drift sent by the peripheral device to the host, where the peripheral device compares samples received to an expected number of samples and reports back any drift between these two values. The USB protocol is silent as to how implicit drift detection is performed, and the USB protocol is also silent on how the host may correct for any drift detected (either implicitly or explicitly). The present disclosure has set forth several equations above and a process for handling drift detection and correction thereof. Figures 7-10 illustrate the two possible drift reporting possibilities for both audio sources (Figures 7 and 8) and audio sinks (Figures 9 and 10) and the correction process. In particular, Figure 7 illustrates an in-band drift reporting process for an audio source, namely, a microphone 700. Data is captured by the microphone 700 and passed in variably-sized data packets (block 702) at a constant rate through a USB device driver 704 to a USB host driver 706 in a USB host. The USB host driver 706 derives the drift information implicitly from data from the microphone 700 and the extracted drift information is used to determine Tref+Toffset for timing the delivery to the audio client and program timer (block 708) while the data is stored in a buffer 710. The formula for determining Tref+Toffset is set forth above. At a timer trigger 712 based on the output of block 708, a fixed number of packets at a variable rate (block 714) are sent to an ASRC 716 from the buffer 710. Concurrently, the drift information is used to report net playback delay (block 718) and generate a synthesized timestamp (block 720). The ASRC 716 outputs resampled data (block 722). While the fixed number of packets is, in fact, fixed, varying the rate allows the drift to be corrected. That is, packet delivery may be accelerated to correct one drift, or slowed down to correct drift in the other direction.

Similarly, Figure 8 is substantially similar but reflects an out-of-band drift reporting process for a microphone 800. In particular, the drift detection is performed by a USB device driver 802 based on output of the microphone 800. The USB device driver 802 then outputs an out-of-band drift report (block 804) and also sends variably-sized data packets at a constant rate (block 806). Both the drift information and the data are provided to a USB host driver 808 in a USB host. The drift information is used to determine Tref+Toffset for timing the delivery to an audio client and program timer (block 810) using the equations set forth above while the data is stored in a buffer 812. At a timer trigger 814 based on the output of block 810, the buffer 812 sends a fixed number of packets at a variable rate (block 816) to an ASRC 818. Concurrently, the drift information is used to report net playback delay (block 820) and generate a synthesized timestamp (block 822). The ASRC 818 outputs resampled data (block 824). Again, use of the variable rate allows for drift correction.

In contrast, Figures 9 and 10 explore the impact of drift on the playback path. In this regard, Figure 9 illustrates an in-band drift reporting process. A microphone 900 may act as the microphone 700 of Figure 7, but of greater interest is speaker 902. The speaker 902 receives data from a USB device driver 904. The USB device driver 904 receives data from a USB host driver 906. The USB host driver 906 compares the data coming into the USB host driver 906 to the USB reference as described above to determine drift information. This drift information is used to determine Tref+Toffset for timing the delivery to an audio client and program timer (block 908) using the equations described above. This determination is used to help generate a timer trigger (block 910), report net recording delay (block 912), and create a synthesized timestamp (block 914). At the timer trigger (block 910), a fixed number of packets at a variable rate are fetched (block 916) and provided to an audio module 918, which buffers the packets in a buffer 920. The buffer 920 releases variably-sized data packets at a constant rate (block 922) and provides them to the USB host driver 906, which passes them to the speaker 902 through the USB device driver 904. The use of the variably-sized data packets allows for drift to be corrected. Correction of drift in speaker direction can be inferred from drift detected at the USB host driver 906 via an in-band drift detector, provided both the microphone 900 and the speaker 902 are clocked via the same source.

Similarly, Figure 10 illustrates an out-of-band drift reporting process. A microphone 1000 may act as the microphone 800 of Figure 8 describe above. Of more interest is speaker 1002. The speaker 1002 passes out-of-band drift information and data (block 1004) to a USB device driver 1006. The USB device driver 1006 receives data from a USB host driver 1008 and likewise passes the out-of-band drift information to the USB host driver 1008. This drift information is used to determine Tref+Toffset for timing the delivery to an audio client and program timer (block 1010). This determination is used to help generate a timer trigger (block 1012), report net recording delay (block 1014), and create a synthesized timestamp (block 1016). At the timer trigger (block 1012), a fixed number of packets at a variable rate are fetched (block 1018) and provided to an audio module 1020, which buffers the packets in a buffer 1022. The buffer 1022 releases variably-sized data packets at a constant rate (block 1024) and provides them to the USB host driver 1008, which passes them to the speaker 1002 through the USB device driver 1006. Again, the use of the variably-sized data packets allows for drift correction.

As noted above, exemplary aspects also allow for future contemplated power savings. This possibility is enabled by the generic (sometimes referred to as agnostic) algorithms used to handle the variable data and sampling rates. That is, in the equations above, the equations start with the agnostic $f_s$ as the sampling rate and $f_t$ as the bus transfer speed (which already contemplates FS, SS, and HS). By using these agnostic values in the application layer algorithms 324, other new sampling rates or other non-standard sampling rates are accommodated. The agnostic approach allows proper estimation of a DLL. It should be appreciated that an increase in binterval (the number of samples per packet) increases the size of the packet and also increases the time that it takes to fill the buffer(s) 316. Since the application processor 302 is idle while the buffer(s) 316 is being filled, the application processor 302 may be put into a low-power mode or sleep mode. The longer it takes to fill the buffer(s) 316 (i.e., a larger number of samples per packet), the longer the application processor 302 may be in the sleep mode. The longer the application processor 302 is in the sleep mode, the more power is saved. Thus, there is pressure in the industry to increase the number of samples per packet. By having a generic binterval in the application layer algorithms 324, exemplary aspects of the present disclosure may accept larger binterval values in the audio device descriptor and thus accommodate any future changes in the number of samples per packet and thus allow for future power savings.

The systems and methods for controlling isochronous data streams according to aspects disclosed herein may be provided in or integrated into any processor-based device. Examples, without limitation, include a set top box, an entertainment unit, a navigation device, a communications device, a fixed location data unit, a mobile location data unit, a global positioning system (GPS) device, a mobile phone, a cellular phone, a smart phone, a session initiation protocol (SIP) phone, a tablet, a phablet, a server, a computer, a portable computer, a mobile computing device, a wearable computing device (e.g., a smart watch, a health or fitness tracker, eyewear, etc.), a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, a portable digital video player, an automobile, a vehicle component, avionics systems, a drone, and a multicopter.

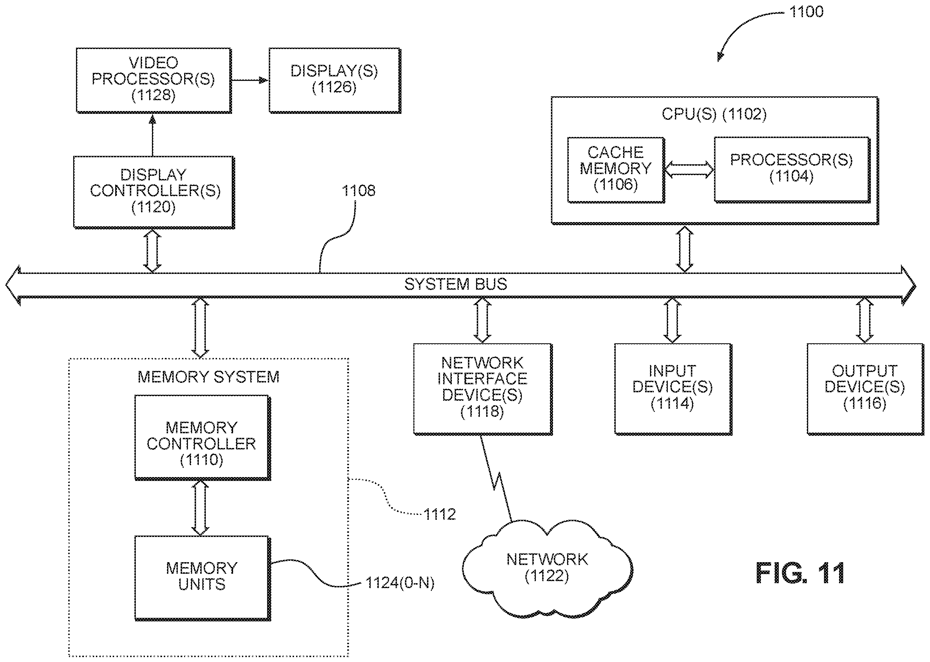

In this regard, Figure 11 illustrates an example of a processor-based system 1100 that can employ a USB system that performs the drift detection, rate matching and uniform packet assembly described herein. In this example, the processor-based system 1100 includes one or more central processing units (CPUs) 1102, each including one or more processors 1104. The CPU(s) 1102 may have cache memory 1106 coupled to the processor(s) 1104 for rapid access to temporarily stored data. The CPU(s) 1102 is coupled to a system bus 1108 and can intercouple master and slave devices included in the processor-based system 1100. As is well known, the CPU(s) 1102 communicates with these other devices by exchanging address, control, and data information over the system bus 1108. For example, the CPU(s) 1102 can communicate bus transaction requests to a memory controller 1110 as an example of a slave device. Although not illustrated in Figure 11, multiple system buses 1108 could be provided, wherein each system bus 1108 constitutes a different fabric.

Other master and slave devices can be connected to the system bus 1108. As illustrated in Figure 11, these devices can include a memory system 1112, one or more input devices 1114, one or more output devices 1116, one or more network interface devices 1118, and one or more display controllers 1120, as examples. The input device(s) 1114 can include any type of input device, including, but not limited to, input keys, switches, voice processors, etc. The output device(s) 1116 can include any type of output device, including, but not limited to, audio, video, other visual indicators, etc. The network interface device(s) 1118 can be any devices configured to allow exchange of data to and from a network 1122. The network 1122 can be any type of network, including, but not limited to, a wired or wireless network, a private or public network, a local area network (LAN), a wireless local area network (WLAN), a wide area network (WAN), a BLUETOOTH™ network, and the Internet. The network interface device(s) 1118 can be configured to support any type of communications protocol desired. The memory system 1112 can include one or more memory units 1124(0-N).

The CPU(s) 1102 may also be configured to access the display controller(s) 1120 over the system bus 1108 to control information sent to one or more displays 1126. The display controller(s) 1120 sends information to the display(s) 1126 to be displayed via one or more video processors 1128, which process the information to be displayed into a format suitable for the display(s) 1126. The display(s) 1126 can include any type of display, including, but not limited to, a cathode ray tube (CRT), a liquid crystal display (LCD), a plasma display, a light emitting diode (LED) display, etc.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

**Claims**

1. A method for controlling communication of audio and/or video streams in a Universal Serial Bus, USB, system, comprising:

   receiving variably-sized packets containing audio and/or video data at a USB driver (314) in a first processor;
   assembling packets of uniform-size at the first processor (304) based on the variably sized packets received, wherein assembling packets of uniform size comprises calculating a size of the packets of uniform size using a USB bus frequency and a number of samples per variably sized packet; and
   passing the packets of uniform size to a second processor (302), wherein said second processor is an application processor wherein said packets of uniform size are useable by applications at an application layer in a protocol stack of the second processor.

2. The method of claim 1, wherein the first processor and the second processor are integrated into a single integrated circuit.

3. The method of claim 1, wherein receiving the variably-sized packets at the first processor comprises receiving the variably-sized packets at a microprocessor or an audio digital signal processor, ADSP (304).

4. The method of claim 1, wherein receiving the variably-sized packets at the first processor comprises receiving the variably-sized packets at an intermediate device (420) between a peripheral (422B) and a host (422A).

5. The method of claim 1, wherein receiving the variably-sized packets comprises receiving the variably-sized packets at a processor in a peripheral.

6. The method of claim 1, wherein assembling the packets of uniform size comprises receiving a time stamp from a high resolution timer (318).

7. An apparatus for a host for controlling communication of audio and/or video streams in a Universal Serial Bus system comprising
   means for receiving variably-sized packets containing audio and/or video data at a a USB driver in a first processor;
   means for assembling packets of uniform size at the first processor based on the received variably sized packets wherein assembling packets of uniform size comprises calculating a size of the packets of uniform size using a USB bus frequency and a number of samples per variably sized packet; and means for passing the packets of uniform size to a second processor wherein said second processor is an application processor wherein said packets of uniform size are useable by applications at an application layer in a protocol stack of the second processor.

8. The apparatus according to claim 7 comprising wherein the second processor is an application processor (302), and further comprising Universal Serial Bus, USB, hardware and wherein the means for receiving, means for assembling and means for passing comprises an audio digital signal processor, ADSP (304) configured to:

receive variably-sized packets at the ADSP through the USB hardware (308);
assemble packets of uniform size at the ADSP; and
pass the packets of uniform size to the application processor (302) for use by applications at the application layer in the protocol stack.

9. The apparatus according to claim 7 wherein the second processor is an application processor and further comprising Universal Serial Bus, USB, hardware and wherein the means for receiving, means for assembling and means for passing comprises comprising:
a system on a chip, SoC, comprising a plurality of processors configured to:

receive variably-sized packets at the first processor (304);
assemble packets of uniform size at the first processor; and
pass the packets of uniform size to the second processor (302) for use by applications at the application layer in the protocol stack.

10. The apparatus of claim 8 or 9, wherein the first processor comprises a microprocessor or an audio digital signal processor, ADSP (304).

11. A processor comprising the apparatus according to claim 7 comprising:
an audio data buffer; and wherein the apparatus comprises a Universal Serial Bus, USB audio client, UAC (314) configured to:

receive variably-sized packets;
assemble uniformly-sized packets; and
pass the uniformly-sized packets to a second processor for use by applications at an application layer in a protocol stack.

12. The processor of claim 11 wherein the processor is adapted to be positioned within a USB peripheral.

13. The processor of claim 11 wherein the processor is adapted to be positioned in an intermediate device (420) configured to sit between a peripheral and a host.

14. The processor of claim 11 wherein the processor is adapted to be positioned in a host.

15. The processor of claim 11 wherein the processor is adapted to be integrated into a device selected from the group consisting of: a set top box; an entertainment unit; a navigation device; a communications device; a fixed location data unit; a mobile location data unit; a global positioning system, GPS device; a mobile phone; a cellular phone; a smart phone; a session initiation protocol, SIP phone; a tablet; a phablet; a server; a computer; a portable computer; a mobile computing device; a wearable computing device; a desktop computer; a personal digital assistant, PDA; a monitor; a computer monitor; a television; a tuner; a radio; a satellite radio; a music player; a digital music player; a portable music player; a digital video player; a video player; a digital video disc, DVD, player; a portable digital video player; an automobile; a vehicle component; avionics systems; a drone; and a multicopter.

**Patentansprüche**

1. Verfahren zur Steuerung der Kommunikation von Audio- und/oder Videoströmen in einem Universal Serial Bus, USB, System, umfassend:

Empfangen von Paketen variabler Größe, die Audio- und/oder Videodaten enthalten, an einem USB-Treiber (314) in einem ersten Prozessor;

Zusammenstellen von Paketen mit einheitlicher Größe in dem ersten Prozessor (304) auf der Grundlage der empfangenen Pakete mit variabler Größe, wobei das Zusammenstellen von Paketen mit einheitlicher Größe das Berechnen einer Größe der Pakete mit einheitlicher Größe unter Verwendung einer USB-Bus-Frequenz und einer Anzahl von Abtastwerten pro Paket mit variabler Größe umfasst; und

Weiterleiten der Pakete mit einheitlicher Größe an einen zweiten Prozessor (302), wobei der zweite Prozessor ein Anwendungsprozessor ist, wobei die Pakete mit einheitlicher Größe von Anwendungen auf einer Anwendungsschicht in einem Protokollstapel des zweiten Prozessors verwendet werden können.

2. Verfahren nach Anspruch 1, wobei der erste Prozessor und der zweite Prozessor in eine einzige integrierte Schaltung integriert sind.

3. Verfahren nach Anspruch 1, wobei das Empfangen der Pakete mit variabler Größe am ersten Prozessor das Empfangen der Pakete mit variabler Größe an einem Mikroprozessor oder einem digitalen Audiosignalprozessor, ADSP (304), umfasst.

4. Verfahren nach Anspruch 1, wobei das Empfangen der Pakete mit variabler Größe an dem ersten Prozessor das Empfangen der Pakete mit variabler Größe an einer Zwischenvorrichtung (420) zwischen einem Peripheriegerät (422B) und einem Host (422A) umfasst.

5. Verfahren nach Anspruch 1, wobei das Empfangen der Pakete mit variabler Größe das Empfangen der Pakete mit variabler Größe an einem Prozessor in einem Peripheriegerät umfasst.

6. Verfahren nach Anspruch 1, wobei das Zusammenstellen der Pakete mit einheitlicher Größe das Empfangen eines Zeitstempels von einem hochauflösenden Zeitgeber (318) umfasst.

7. Vorrichtung für einen Host zur Steuerung der Kommunikation von Audio- und/oder Video-Strömen in einem Universal-Serial-Bus-System, wobei die Vorrichtung folgendes aufweist:

Mittel zum Empfangen von Paketen variabler Größe, die Audio- und/oder Videodaten enthalten, an einem USB-Treiber in einem ersten Prozessor;

Mittel zum Zusammenstellen von Paketen mit einheitlicher Größe in dem ersten Prozessor auf der Grundlage der empfangenen Pakete mit variabler Größe, wobei das Zusammenstellen von Paketen mit einheitlicher Größe das Berechnen einer Größe der Pakete mit einheitlicher Größe unter Verwendung einer USB-Busfrequenz und einer Anzahl von Abtastwerten pro Paket mit variabler Größe umfasst; und

Mittel zum Weiterleiten der Pakete mit einheitlicher Größe an einen zweiten Prozessor, wobei der zweite Prozessor ein Anwendungsprozessor ist, wobei die Pakete mit einheitlicher Größe von Anwendungen auf einer Anwendungsschicht in einem Protokollstapel des zweiten Prozessors verwendet werden können.

8. Vorrichtung nach Anspruch 7, umfassend, wobei der zweite Prozessor ein Anwendungsprozessor (302) ist, und ferner Universal Serial Bus, USB, Hardware umfasst, und wobei das Mittel zum Empfangen, das Mittel zum Zusammenstellen und das Mittel zum Weiterleiten einen digitalen Audiosignalprozessor, ADSP (304), umfasst, der konfiguriert ist, um:

Pakete variabler Größe am ADSP über die USB-Hardware (308) zu empfangen;

Pakete mit einheitlicher Größe am ADSP zusammenzustellen; und

die Pakete mit einheitlicher Größe an den Anwendungsprozessor (302) zur Verwendung durch Anwendungen auf der Anwendungsschicht im Protokollstapel weiterzuleiten.

9. Vorrichtung nach Anspruch 7, wobei der zweite Prozessor ein Anwendungsprozessor ist und ferner eine Universal Serial Bus, USB, Hardware umfasst und wobei die Mittel zum Empfangen, Mittel zum Zusammenstellen und Mittel zum Weiterleiten umfassen

ein System auf einem Chip, SoC, das eine Vielzahl von Prozessoren umfasst, die konfiguriert sind, um:

Pakete variabler Größe an dem ersten Prozessor (304) zu empfangen

Pakete einheitlicher Größe im ersten Prozessor zusammenzustellen; und

die Pakete einheitlicher Größe an den zweiten Prozessor (302) zur Verwendung durch Anwendungen auf der Anwendungsschicht in dem Protokollstapel weiterzuleiten.

10. Vorrichtung nach Anspruch 8 oder 9, wobei der erste Prozessor einen Mikroprozessor oder einen digitalen Audiosignalprozessor, ADSP (304), umfasst.

11. Prozessor mit der Vorrichtung nach Anspruch 7, umfassend:
    einen Audiodatenpuffer; und wobei die Vorrichtung einen Universal Serial Bus, USB-Audio-Client, UAC (314) umfasst, der konfiguriert ist, um:

    Pakete variabler Größe zu empfangen;
    Pakete einheitlicher Größe zusammenzustellen; und
    die Pakete einheitlicher Größe an einen zweiten Prozessor zur Verwendung durch Anwendungen auf einer Anwendungsschicht in einem Protokollstapel weiterzuleiten.

12. Prozessor nach Anspruch 11, wobei der Prozessor so ausgelegt ist, dass er innerhalb eines USB-Peripheriegeräts positioniert werden kann.

13. Der Prozessor nach Anspruch 11, wobei der Prozessor so angepasst ist, dass er in einem Zwischengerät (420) positioniert werden kann, das so konfiguriert ist, dass es zwischen einem Peripheriegerät und einem Host sitzt.

14. Der Prozessor nach Anspruch 11, wobei der Prozessor so angepasst ist, dass er in einem Host positioniert werden kann.

15. Der Prozessor nach Anspruch 11, wobei der Prozessor angepasst ist, um in ein Gerät integriert zu werden, das ausgewählt ist aus der Gruppe, bestehend aus: einer Set-Top-Box; einer Unterhaltungseinheit; einem Navigationsgerät; einem Kommunikationsgerät; einer festen Standortdateneinheit; einer mobilen Standortdateneinheit; einem globalen Positionierungssystem, GPS-Gerät; einem Mobiltelefon; einem zellularen Telefon; einem Smartphone; einem Sitzungsinitiierungsprotokoll, SIP-Telefon; einem Tablet; einem Phablet; einem Server; einem Computer; einem tragbaren Computer; einem mobilen Rechengerät; einem tragbaren Rechengerät; einen Desktop-Computer; einen persönlichen digitalen Assistenten, PDA; einen Monitor; einen Computermonitor; ein Fernsehgerät; einen Tuner; ein Radio; ein Satellitenradio; ein Musikabspielgerät; ein digitales Musikabspielgerät; ein tragbares Musik-kabspielgerät; ein digitales Videoabspielgerät; ein Videoabspielgerät; ein digitales Videoplattenabspielgerät, DVD-Abspielgerät; ein tragbares digitales Videoabspielgerät; ein Automobil; eine Fahrzeugkomponente; Avioniksysteme; eine Drohne; und einen Multicopter.

## Revendications

1. Procédé pour contrôler la communication de flux audio et/ou vidéo dans un système Universal Sériai Bus, USB, comprenant les étapes consistant à :
   recevoir des paquets de tailles variables contenant des données audio et/ou vidéo au niveau d'un pilote USB (314) dans un premier processeur :

   assembler des paquets de taille uniforme au niveau du premier processeur (304) sur la base des paquets de taille variable reçus, dans lequel l'assemblage de paquets de taille uniforme comprend le calcul d'une taille des paquets de taille uniforme en utilisant une fréquence de bus USB et un nombre d'échantillons par paquet de taille variable, et
   faire passer les paquets de taille uniforme à un deuxième processeur (302), dans lequel ledit deuxième processeur est un processeur d'application, dans lequel lesdits paquets de taille uniforme sont utilisables par des applications au niveau d'une couche d'application dans une pile de protocoles du deuxième processeur.

2. Procédé selon la revendication 1, dans lequel le premier processeur et le deuxième processeur sont intégrés dans un seul circuit intégré.

3. Procédé selon la revendication 1, dans lequel la réception des paquets de taille variable au niveau du premier processeur comprend la réception des paquets de taille variable au niveau d'un microprocesseur ou d'un processeur de signal audio numérique, ADSP (304).

**4.** Procédé selon la revendication 1, dans lequel la réception des paquets de taille variable au niveau du premier processeur comprend la réception des paquets de taille variable au niveau d'un dispositif intermédiaire (420) entre un périphérique (422B) et un hôte (422A).

**5.** Procédé selon la revendication 1, dans lequel la réception des paquets de taille variable comprend la réception des paquets de taille variable au niveau d'un processeur dans un périphérique.

**6.** Procédé selon la revendication 1, dans lequel l'assemblage des paquets de taille uniforme comprend la réception d'un horodatage d'un temporisateur haute résolution (318).

**7.** Appareil pour un hôte pour contrôler la communication de flux audio et/ou vidéo dans un système Universal Sériai Bus comprenant :
des moyens pour recevoir des paquets de tailles variables contenant des données audio et/ou vidéo au niveau d'un pilote USB dans un premier processeur :

des moyens pour assembler des paquets de taille uniforme au niveau du premier processeur sur la base des paquets reçus de taille variable, dans lequel l'assemblage de paquets de taille uniforme comprend le calcul d'une taille des paquets de taille uniforme en utilisant une fréquence de bus USB et un nombre d'échantillons par paquet de taille variable ; et
des moyens pour faire passer les paquets de taille uniforme à un deuxième processeur, dans lequel ledit deuxième processeur est un processeur d'application, dans lequel lesdits paquets de taille uniforme sont utilisables par des applications au niveau d'une couche d'application dans une pile de protocoles du deuxième processeur.

**8.** Appareil selon la revendication 7, dans lequel le deuxième processeur est un processeur d'application (302), et comprenant en outre du matériel Universal Sériai Bus, USB, et dans lequel les moyens de réception, les moyens d'assemblage et les moyens de passage comprennent un processeur de signal audio numérique ADSP (304) configuré pour recevoir des paquets de tailles variables au niveau de l'ADSP via le matériel USB (308) ; assembler des paquets de taille uniforme au niveau de l'ADSP ; et
faire passer les paquets de taille uniforme au processeur d'application (302) pour une utilisation par des applications au niveau de la couche d'application dans la pile de protocoles.

**9.** Appareil selon la revendication 7, dans lequel le deuxième processeur est un processeur d'application et comprenant en outre du matériel Universal Serial Bus, USB, et dans lequel les moyens de réception, les moyens d'assemblage et les moyens pour faire passer comprennent :
un système sur puce, SOC, comprenant une pluralité de processeurs configurés pour :

recevoir des paquets de tailles variables au niveau du premier processeur (304) ;
assembler des paquets de taille uniforme au niveau du premier processeur ; et
faire passer les paquets de taille uniforme au deuxième processeur (302) pour une utilisation par des applications au niveau de la couche application dans la pile de protocoles.

**10.** Appareil selon la revendication 8 ou 9, dans lequel le premier processeur comprend un microprocesseur ou un processeur de signal audio numérique, ADSP (304).

**11.** Processeur comprenant l'appareil selon la revendication 7 comprenant :
une mémoire tampon de données audio ; et dans lequel l'appareil comprend un client audio de bus série universel, USB, UAC (314) configuré pour :

recevoir des paquets de tailles variables ;
assembler des paquets de taille uniforme ; et
faire passer les paquets de taille uniforme à un deuxième processeur pour une utilisation par des applications au niveau d'une couche d'application dans une pile de protocoles.

**12.** Processeur selon la revendication 11, dans lequel le processeur est adapté pour être positionné à l'intérieur d'un périphérique USB.

**13.** Processeur selon la revendication 11, dans lequel le processeur est adapté pour être positionné dans un dispositif intermédiaire (420) configuré pour être situé entre un périphérique et un hôte.

**14.** Processeur selon la revendication 11, dans lequel le processeur est adapté pour être positionné dans un hôte

**15.** Processeur selon la revendication 11, dans lequel le processeur est adapté pour être intégré dans un dispositif choisi dans le groupe comprenant : un boîtier décodeur ; une unité de divertissement ; un appareil de navigation ; un appareil de communication ; une unité de données de localisation fixe ; une unité de données de localisation mobile ; un appareil de système de positionnement global, GPS ; un téléphone portable ; un téléphone cellulaire ; un téléphone intelligent ; un téléphone avec protocole de lancement de session, SIP ; une tablette ; une phablette ; un serveur ; un ordinateur ; un ordinateur portable ; un appareil informatique mobile ; un objet connecté personnel ; un ordinateur de bureau ; un assistant numérique personnel, PDA ; un moniteur ; un écran d'ordinateur ; une télévision ; un syntoniseur ; une radio ; une radio satellite ; un lecteur de musique ; un lecteur de musique numérique ; un lecteur de musique portable ; un lecteur vidéo numérique ; un lecteur vidéo ; un lecteur de disque vidéo numérique, DVD ; un lecteur vidéo numérique portable ; une automobile ; un composant de véhicule ; des systèmes avioniques ; un drone ; et un multicopter.

**FIG. 1**

EP 3 476 084 B1

**FIG. 2**

**FIG. 3**

FIG. 4A

FIG. 4B

FIG. 5

**FIG. 5**
**(cont.)**

| Data Processor 302 | ASRC 326 | Data Regulator in UAC Driver 314 | Timer/Clock 318 | USB HW Controller 308 |
|---|---|---|---|---|

600

Activation Setup

602

Set Input and Output Sampling Frequency

Set Input Sampling Frequency

Set Bus Transfer Frequency

Set Service Interval ( Service Interval >=BusTransfer Frequency)

Set Output Buffer Size

Set Clock Recovery Mode (Async, Adaptive, or Sync)

Set HW Interface Specific Setup Parameters

Register Physical Memory For Circular FIFO Buffer

Activate

604

Set HW Interface Specific Setup Parameters — 606

Program The Next Free FIFO Space To Write — 608

Data Ready Event

610

Post-Activation Setup

- Store The Clock Value Into $T_{ref}$
- Add $T_{jitter}$ (Derived From The FIFO Size And, If Not Explicit-Feedback Driven, The Received Data Size) To $T_{ref}$
- Initialize $I=0$, $D_{app-hw}=0$, $D_{device-hw}=0$
- Compute The Next $T_{offset}$ (Derived From The System and HW Parameters)
- Compute $T_{next}$ (The Absolute Time of The Next Timer Event) From $T_{next} = T_{ref} + T_{offset} + D_{app-hw} - D_{device-hw}$

616

Read Clock — 612

Read Data Size — 614

Program $T_{next}$

To FIG. 6 (cont.)

To FIG. 6 (cont.)

Program The Next Free FIFO Space To Write

618

620

## FIG. 6

From FIG. 6

From FIG. 6

Steady State Operations

( This Sequence Repeats Until Deactivation)

The Timer Event Runs Asynchronously To and ( Most Likely) Out-Of-Phase To The Data Ready Event

Data Ready Event — 622

o Update The Net Drift $D_{app-hw}$

Read Clock — 624

o (If Not Explicit-Feedback Driven) Update The Net Drift $D_{device-hw}$ — 628

Read Data Size — 626

630

Async Clock Feedback Event

o (If Explicit-Feedback Driven) Update The Net Drift $D_{device-hw}$ — 632

634

Timer Expired Event

o Increment I By1

o If (I==Sampling Frequency) $T_{ref}=T_{next}$ I=0

o Compute The Next $T_{offset}$

o Compute $T_{next}=T_{ref} + T_{offset} + D_{app-hw} - D_{device-hw}$ — 636

638

Data Available

Program $T_{next}$ — 640

Program The Next Free FIFO Space To Write — 642

644

Read Net Drift ( Or Time Stamp)

646

Read Data

646A

Read Data

648

o Compute Number of Samples To Correct From The New Net Drift And The Previous Net Drift

Stretch Out Drift Correction Over A Configurable Period to Reduce The Perceivable Glitches (i.e. 1 Sample every 25ms vs 10s)

Write (Data, Data.Length, Samples_To_Correct, Duration_To_Correct)

Read Corrected Data

Deliver Data

De-activation Setup

Deactivate

Clear

Done

Stop

660

**FIG. 6 (cont.)**

26

FIG. 7

MICROPHONE — 700

VARIABLY SIZED DATA PACKETS AT CONSTANT RATE — 702

USB DEVICE DRIVER — 704

USB HOST DRIVER | IN BAND DRIFT DETECTOR — 706

708 — DETERMINE TREF+ TOFFSET FOR TIMING THE DELIVERY TO AUDIO CLIENT AND PROGRAM TIMER

BUFFER — 710

712 — TIMER TRIGGER

SEND FIXED NUMBER OF PACKETS AT VARIABLE RATE — 714

718 — REPORT NET PLAYBACK DELAY

ASRC — 716

RESAMPLED DATA — 722

720 — SYNTHESIZED TIMESTAMP

EP 3 476 084 B1

27

FIG. 8

**FIG. 9**

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7215670 B1

- US 201012202 A1